# EUROPÄISCHE PATENTSCHRIFT

(11) **EP 3 475 536 B1**
(45) Veröffentlichungstag und Bekanntmachung des Hinweises auf die Patenterteilung: **19.02.2020**
(21) Anmeldenummer: 17758462.0
(22) Anmeldetag: 16.08.2017
(51) Int. Cl.: F01D 17/08, F01D 21/00, F01D 21/12, F02C 9/00, F02C 9/28, F02C 9/32

(54) **VERFAHREN ZUR SCHADENSERKENNUNG BEI BETRIEB EINER GASTURBINE**
METHOD FOR DETECTING DAMAGE IN THE OPERATION OF A GAS TURBINE
PROCÉDÉ DE RECONNAISSANCE DE DÉGÂTS DANS UNE TURBINE À GAZ EN FONCTIONNEMENT

(30) Priorität: 23.09.2016 EP 16190374
(43) Veröffentlichungstag der Anmeldung: 01.05.2019
(73) Patentinhaber: Siemens Aktiengesellschaft, 80333 München (DE)
(72) Erfinder: LUCK, Fabian, 12169 Berlin (DE); PFEIFER, Uwe, 12557 Berlin (DE)
(86) Internationale Anmeldenummer: PCT/EP2017/070700
(87) Internationale Veröffentlichungsnummer: WO 2018/054613

(56) Entgegenhaltungen:
- US-A1- 2004 079 070
- US-A1- 2004 086 024
- US-A1- 2012 194 667

## Beschreibung

Die vorliegende Erfindung betrifft ein Verfahren zur Schadenserkennung bei Betrieb einer Gasturbine, sowie eine solche Gasturbine als auch eine Regelvorrichtung, welche dazu ausgebildet ist, ein entsprechendes Verfahren auszuführen. Verfahren zur Schadenserkennung bei Betrieb einer Gasturbine sind bereits aus US 2004/079070 A1 und US 2004/086024 A1. Eine Regelvorrichtung für eine Turbine ist zum Beispiel aus US 2012/194667 A1 bekannt.

Bei Gasturbinen können thermisch bedingt vielerlei Schäden auftreten. Bei Gasturbinen ist hierbei etwa der thermisch am höchsten beanspruchte Bereich, der so genannte Heißgasbereich, Temperaturen von bis zu 1.600 °C ausgesetzt. Liegt nun ein Schaden in dem Heißgasbereich vor, insbesondere an den Brennern bzw. Rohrbrennkammern einer Gasturbine, so kann oftmals beobachtet werden, dass diese Schäden nicht plötzlich auftreten, sondern sich über einen längeren Zeitraum hin abzeichnen und entwickeln.

Oftmals gibt zu diesen thermisch bedingten Schäden eine inhomogene Temperaturverteilung innerhalb der Gasturbine Anlass. Bei einer Gasturbine werden etwa die Turbinenschaufeln im Falle eines Brennerschadens sehr stark thermisch wechselbeansprucht, da sie aufgrund ihrer Rotation den unterschiedlichen thermischen Bedingungen der Brenner ausgesetzt sind. Diese Wechselbeanspruchung schädigt die Schaufeln einer Gasturbine mit zunehmender Betriebszeit strukturell. Je höher die Temperaturunterschiede, welchen die Komponenten bei der Wechselbeanspruchungen ausgesetzt sind, desto schneller werden auch die Komponenten altern und schadensbedingt ausgewechselt werden müssen.

Nicht nur die thermische Wechselbeanspruchung, sondern auch statische thermische Spannungen können in der Nachbarschaft der beschädigten Stellen innerhalb der Gasturbine zu Materialversagen führen. Sind etwa bei einer Gasturbine die Brenner bzw. die Rohrbrennkammern beschädigt, lässt sich in Folge oftmals ein thermisches Materialversagen im Bereich der so genannten Transitions beobachten. Diesem Materialversagen geht typischerweise eine Schädigung der Keramikbeschichtung voraus, mit welcher die Transitions versehen sind. Nach Versagen dieser Keramikbeschichtung kommt es oftmals zu einem Folgeversagen der metallischen Grundstruktur der Transitions. In Folge der ungünstigen thermischen Belastung dieser Bauteile kann es über längere Betriebszeiträume zu Mikrorissen bzw. anderen materialtechnischen Schädigungen der einzelnen Bauteile kommen. Derartige Mikrorisse entwickeln sich im Laufe der weiteren Betriebszeit zu makroskopischen Rissen, durch welche etwa kalte Kühlluft in die Brennkammer eintreten kann, was wiederum eine Absenkung der Brennerkammertemperatur verursacht. Die so abgesenkte Austrittstemperatur des Heißgases an dem jeweils betroffenen Brenner setzt sich nach Durchlaufen aller Turbinenstufen in zunehmend abgeschwächter Form lokal fort, kann jedoch im Bereich des Abgasaustrittskanals der Gasturbine noch messtechnisch signifikant als Kaltluftsträhne nachgewiesen werden.

Um derartige Schadensereignisse messtechnisch erfassen zu können, werden in den Gasturbinen oftmals Temperatursensoren (Thermoelemente) eingesetzt, welche Unterschiede in den thermischen Belastungen der Gasturbine bzw. der von dieser umfassten Bauteile erfassen lassen. Bei Gasturbinen sind etwa zwölf bis vierundzwanzig Temperatursensoren radial im Bereich des Abgasaustrittskanals verteilt und erlauben so eine polare Abgastemperaturmessung. Bisher angewandte Methoden um derartige thermische Schadensereignisse zu erfassen, erforderten etwa eine Tiefpassfilterung der Temperaturmesswerte bzw. eine Vergleichsrechnung einzelner von den Temperatursensoren aufgenommener Temperaturmesswerte miteinander.

Hierbei hat sich jedoch gezeigt, dass thermisch bedingte Schäden nicht ausreichend rechtzeitig und sicher erkannt werden können, weshalb es eines weiteren Verfahrens bedarf, um die mit den Temperatursensoren gemessenen Temperaturmesswerte auswerten zu können, um eine sichere und zuverlässige Vorhersage vornehmen zu können. Für den Betreiber einer Gasturbine ist es wünschenswert, derartige thermische Schäden möglichst früh zu erkennen, um eine verbesserte Planbarkeit der Wartungsmaßnahmen sowie eine Planbarkeit der Abschaltung der Gasturbine im Falle einer Instandssetzungsreparatur zu haben. Zudem will der Betreiber einer solchen Gasturbine einen Totalschaden verhindern, um so etwa auch Folgeschäden an anderen Bauteilen innerhalb der Gasturbine vermeiden zu können.

Die bekannten aktuellen Auswerteverfahren zur Analyse der Temperaturmesswerte liefern aufgrund der mitunter breiten Streuung der Ergebnisse nur unsichere und damit unzureichende Ergebnisse. Infolgedessen lässt sich die thermische Schadensnahme oftmals nicht ausreichend frühzeitig erkennen. Zudem ist in den aufgenommenen Temperaturmesswerten auch eine natürliche stochastische Streuung vorhanden, was zu einer weiteren Verdeckung einer möglichen thermischen Schadensnahme führen kann.

Es stellt sich also als technisches Erfordernis heraus, ein weiteres Verfahren bzw. eine geeignete Regelvorrichtung zum Ausführen eines solchen Verfahrens bzw. eine entsprechende Gasturbine vorzuschlagen, welche die aus dem Stand der Technik bekannten Nachteile vermeiden kann. Insbesondere soll ein Verfahren bzw. eine Regelvorrichtung wie auch eine Gasturbine vorgeschlagen werden, welche eine sichere und zuverlässige Früherkennung von thermischen Schadensereignissen ermöglicht.

Diese der Erfindung zugrunde liegende Aufgabe ist gelöst durch ein Verfahren gemäß Anspruch 1 oder gemäß Anspruch 7 sowie durch eine Regelvorrichtung gemäß Anspruch 10 und eine Gasturbine gemäß Anspruch 11.

Gemäß Anspruch 1 ist die der Erfindung zugrunde liegende Aufgabe gelöst durch ein Verfahren zur Schadenserkennung bei Betrieb einer Gasturbine umfassend folgende Schritte:
- Berechnen eines Mittelwerts von einzelnen Temperaturmesswerten über einen vorgegebenen Abtastzeitraum eines Ensembles von Temperatursensoren in oder an der Gasturbine;
- Berechnen der einzelnen Temperaturdifferenzen zwischen dem Mittelwert und den einzelnen Temperaturmesswerten über den vorgegebenen Abtastzeitraum;
- Berechnen der einzelnen Temperaturdifferenzen für zeitlich aufeinander folgende Abtastzeiträume über ein vorgegebenes Zeitintervall;
- Erstellen einer ersten Verteilung durch Einteilen der einen Temperatursensor zugeordneten Temperaturdifferenzen für das vorgegebene Zeitintervall in Temperaturdifferenzintervalle;
- Vergleichen der ersten Verteilung mit einer zweiten Verteilung von ebenfalls in Temperaturdifferenzintervalle eingeteilte Temperaturdifferenzen;
- Erzeugen eines Betriebssignals auf Grundlage eines negativen Ergebnisses des Vergleichs
- wobei die zweite Verteilung in dieselben Temperaturdifferenzintervalle eingeteilte Temperaturdifferenzen desselben Temperatursensors betrifft, welche jedoch für ein anderes Zeitintervall berechnet wurden.

Weiterhin werden die der Erfindung zugrunde liegenden Aufgaben gelöst durch eine Regelvorrichtung, welche dazu ausgebildet ist, das vorab wie auch nachfolgend beschriebene Verfahren auszuführen, wobei eine Berechnungseinheit umfasst ist, welche die Berechnung des Mittelwerts der einzelnen Temperaturmesswerte, die Berechnung der einzelnen Temperaturdifferenzen, die Erstellung einer ersten Verteilung und einer zweiten Verteilung, und im Vergleich der ersten Verteilung mit einer zweiten Verteilung ausführt, sowie eine Signalerzeugungseinheit, welche im Falle eines negativen Ergebnisses des Vergleichs ein Betriebssignal erzeugt.

Weiterhin werden die der Erfindung zugrunde liegenden Aufgaben gelöst durch eine Gasturbine, welche eine vorab wie auch nachfolgend beschriebene Regelvorrichtung aufweist.

An dieser Stelle ist darauf hinzuweisen, dass die vorliegenden Verteilungen im Sinne einer Häufigkeitsverteilung zu verstehen sind.

Der erwähnte Abtastzeitraum entspricht hierbei einer inversen Abtastrate, gemäß welcher vorliegend bspw. einmal pro Sekunde eine Temperaturdifferenz berechnet wird. Wesentlich ist, dass der Abtastzeitraum kürzer ist als ein Zeitraum, über welchen typischerweise die Gasturbine betrieben wird, bevor eine Schadensnahme erfolgt. In anderen Worten soll der Abtastzeitraum einerseits ausreichend kurz sein, um eine möglichst gute Zeitauflösung zu erlangen, andererseits auch nicht zu kurz, um damit eine unnötige Aufnahme von Daten, welche nachfolgend zeitlich auch zwischengespeichert werden müssen, zu vermeiden. Typische Abtastzeiträume liegen im Bereich von Sekunden bis Minuten.

Die vorliegenden Zeitintervalle sind erfindungsgemäß nicht kürzer als die Abtastzeiträume, können diesen aber in einem Fall sogar entsprechen. Typischerweise sind die Zeitintervalle jedoch deutlich länger, so dass zahlreiche Abtastzeiträume in einem Zeitintervall liegen können. Die Zeitintervalle müssen so groß gewählt werden, dass die zeitliche Entwicklung der thermischen Schadensnahme ausreichend gut beobachtet werden kann. Typische Zeitintervalle liegen im Bereich von Tagen, Wochen oder sogar Monaten.

An dieser Stelle ist auch darauf hinzuweisen, dass die Temperaturdifferenzintervalle im Sinne von numerischen Intervallen zu verstehen sind, in welche die Temperaturdifferenzen je nach Wert einsortiert werden können, um nach entsprechender Einteilung eine Verteilung zu erhalten. In anderen Worten sind die Temperaturdifferenzintervalle nichts anderes als numerische Bereiche, welche vorab definiert wurden, über welchen eine Häufigkeitsverteilung berechnet werden soll. Die numerischen Intervalle sind im Normalfall benachbart, so dass jeder Temperaturdifferenz ein Intervall zugeordnet werden kann. Die numerischen Intervalle werden hierbei aus berechnungstechnischen Gründen insbesondere gleich beabstandet voneinander gewählt, so dass jeweils ein Nachbarintervall sich über eine vergleichbare Intervalllänge erstreckt. Bei den vorliegenden Gasturbinen hat es sich als günstig erwiesen, die Nachbarintervalle zwischen 0,1 Kelvin und ca. 4 Kelvin hinsichtlich ihrer Intervallbreite zu wählen. Werden nun nachfolgend die Häufigkeiten einzelner Temperaturdifferenzen in den bestimmten numerischen Intervallen gezählt und mit der Gesamtzahl aller Einträge verglichen, kann eine Häufigkeitsverteilung im Sinne der vorliegenden Verteilung leicht berechnet werden.

Bei einer erfindungsgemäßen Gasturbine können die Temperatursensoren bevorzugt im Bereich des Abgasaustrittskanals angeordnet sein. Auch eine Anordnung der Temperatursensoren mit radialer Geometrie, zur Aufnahme eines polaren Temperaturbildes ist bevorzugt.

Erfindungsgemäß soll ein Betriebssignal auf Grundlage eines negativen Ergebnisses des Vergleiches erzeugt werden. Ein negatives Ergebnis liegt dann vor, falls aus dem Ergebnis des Vergleiches die Erkenntnis gewonnen werden kann, dass ein Schadensereignis eingetreten ist bzw. ein solches sich abzeichnet und zukünftig bevorsteht. Hierbei müssen typischerweise bestimmte Grenzwerte vorab bestimmt sein, deren Überschreitung bzw. Erreichen als negatives Ergebnis klassifiziert werden kann. Derartige Grenzwerte werden typischerweise anhand von Erfahrungswerten definiert. Auch je nach betrachteter Komponente der Gasturbine können hier unterschiedliche Grenzwerte vorbestimmt sein. Eine pauschale Vorabbestimmung derartiger Grenzwerte ist nicht sinnvoll.

Erfindungsgemäß ist vorgesehen, die Schadenserkennung auf Grundlage des Vergleichs zweier Verteilungen vorzunehmen. Die Verteilungen werden hierbei im Vorfeld für jeweilige Temperatursensoren erstellt und erlauben etwa die zeitliche Änderung der Abweichungen einzelner Temperaturmesswerte vom Mittelwert der einzelnen Temperaturmesswerte anzugeben. Anstelle also nun, wie etwa bisher üblich, einzelne Absolutwerte der Temperatursensoren zu betrachten, werden erfindungsgemäß einzelne Verteilungen der Temperaturmesswerte betrachtet, welche über ein vorgegebenes Zeitintervall aufgenommen wurden. Die Auflösung der Verteilung wird hierbei durch die Abtastzeiträume bestimmt, und kann je nach Anforderung individuell eingestellt werden.

Aufgrund des Vergleichs einzelner Verteilungen können nun die vorab beschriebenen Probleme hinsichtlich der Streuung einzelner Temperaturmesswerte verringert werden, da ganze Verteilungen verglichen werden, welche aus vielen Temperaturmesswerten abgeleitet wurden. Der Vergleich zweier Verteilungen kann hierbei wiederum auf unterschiedliche Art und Weise erfolgen, und ist Gegenstand der nachfolgenden Unteransprüche. Es zeigt sich jedoch, dass nach Ausführen einer einfachen numerischen Berechnung der Vergleich aus den Verteilungen einem Vergleich einzelner Temperaturmesswerte deutlich überlegen ist.

Sollte sich aus einem solchen Vergleich nun ergeben, dass ein bestimmtes negatives Ergebnis abgeleitet werden kann, wird für den Betreiber der Gasturbine ein Betriebssignal erzeugt, welches etwa eine Leistungsreduzierung, ein bereichsweises Abschalten oder sogar ein Stilllegen der gesamten Gasturbine zur Folge haben kann.

Gemäß Anspruch 1 ist es vorgesehen, dass die zweite Verteilung in dieselben Temperaturdifferenzintervalle eingeteilte Temperaturdifferenzen desselben Temperatursensors betrifft, welche doch für ein anderes Zeitintervall berechnet wurden. Folglich kann so die zeitliche Veränderung der Verteilung eines Temperatursensors verfolgt werden und so auf zeitliche Veränderungen im örtlichen Bereich des Temperatursensors Rückschlüsse gezogen werden. Zeigt sich also etwa, dass zu einem zeitlich nachfolgenden Zeitintervall sich eine signifikante Änderung der zweiten Verteilung ergeben hat, kann dies ein Anzeichen für das Vorliegen eines negativen Ergebnisses sein. So kann etwa an einem vorbestimmten Temperatursensor festgestellt werden, dass sich eine Veränderung der zweiten Verteilung ergeben hat, wodurch etwa auf eine thermische Schadensnahme im Brennkammerbereich geschlossen werden könnte.

Gemäß einer weiteren Ausführungsform der Erfindung ist vorgesehen, dass der Vergleich der ersten Verteilung mit der zweiten Verteilung durch einen Vergleich des Maximums der ersten Verteilung mit dem Maximum der zweiten Verteilung erfolgt. Der Vergleich der Maxima ist hierbei relativ einfach möglich, da lediglich einzelne numerische Werte miteinander verglichen werden müssen. Es ist also nicht notwendig, die gesamte Verteilungsbreite von erster Verteilung und zweiter Verteilung miteinander in Bezug zu setzen, sondern es reicht aus, lediglich die numerischen Werte der Maxima miteinander zu vergleichen, um eine statistisch signifikante Aussage vornehmen zu können. Die Berechnung ist also schnell und einfach durchzuführen.

Gemäß einer weiteren Ausführungsform der Erfindung ist vorgesehen, dass der Vergleich der ersten Verteilung mit der zweiten Verteilung dadurch erfolgt, dass beide Verteilungen in einem gemeinsamen Diagramm mit einer den zeitlichen Verlauf über die beiden Zeitintervalle repräsentierenden Achsen aufgetragen werden. Durch die grafisch dargestellte Änderung des Verlaufs der Verteilungen kann ebenfalls erkannt werden, wann die Verteilungsänderung eine Schadensnahme anzeigt bzw. ankündigt. Besonders geeignet sind hierbei Farbwerthistogramme, welche anhand der Farbwerte einen numerischen Wertebereich erkennen lassen und so über Änderungen der Farbwerte auch auf Änderungen der numerischen Werte rückschließen lassen. Die Farbwerte erlauben eine optisch leicht eingängige Verteilungsdarstellung wie auch eine Kenntlichmachung von Verteilungsänderungen über die Zeit hinweg. Derartige Farbwerthistogramme können beispielsweise dem Betreiber der Gasturbine für die einzelnen Temperatursensoren angezeigt werden, so dass er die Bereiche, an welchen Temperatursensoren angebracht sind, überprüfen kann.

Entsprechend einer weiteren Ausführungsform des erfindungsgemäßen Verfahrens ist vorgesehen, dass der Vergleich der ersten Verteilung mit der zweiten Verteilung durch einen Vergleich der Lage des Maximums der ersten Verteilung mit Grenzen eines Zustandsraumes erfolgt, welcher Zustandsraum aus der Verteilungsbreite der zweiten Verteilung bestimmt wurde. Die zweite Verteilung gibt also aufgrund ihrer Breite einen Zustandsraum, das heißt ein Werteband vor, innerhalb dessen das erste Maximum bei intakter Gasturbine liegen sollte. Der Zustandsraum ergibt sich hierbei aus Erfahrungswerten, das heißt Messwerte über eine Länge des Zeitintervalls, wobei sich der Zustandsraum aus der Verteilungsbreite der zweiten Verteilung ableitet. Insbesondere kann als Zustandsraum die drei Sigma-Breite der zweiten Verteilung herangezogen werden. Ist die Verteilungsbreite der zweiten Verteilung einmal bestimmt, etwa im Vorfeld durch Auswertung zahlreicher Temperaturmesswerte, kann leicht überprüft werden, ob das Maximum der ersten Verteilung in den Zustandsraum der zweiten Verteilung fällt oder nicht. Ein negatives Ergebnis wäre etwa dann gegeben, wenn das Maximum der ersten Verteilung außerhalb des Zustandsraumes der zweiten Verteilung zu liegen kommt. Die Ausführung dieses numerischen Vergleichs ist verhältnismäßig einfach und leicht zu vollführen.

Gemäß eines weiteren Aspekts der vorliegenden Erfindung ist vorgesehen, dass die erste Verteilung und/oder die zweite Verteilung kumulativ für alle Abtastzeiträume der Zeitintervalle berechnet werden. Die kumulative Berechnung erhöht die statistische Aussagekraft, da zunehmend mehr Verteilungswerte der jeweils vorhergehend bereits bestimmten Verteilungen zugeführt werden können, um so sukzessive eine immer genauere Verteilung zu erstellen. Eine derartige kumulative Berechnung zeigt am Ende von verhältnismäßig langen Zeitintervallen jedoch nur geringe Änderungen, so dass die Zeitintervalle entsprechend kurz gewählt werden sollten, um so eine Verdeckung von sich abzeichnenden thermischen Schadensnahmen zu verhindern.

Alternativ oder auch zusätzlich kann vorgesehen sein, dass die zweite Verteilung aus der ersten Verteilung durch eine gleitende Berechnung über das erste Zeitintervall hinaus hervorgeht. Die zweite Verteilung ergibt sich also aus der ersten Verteilung, indem das zweite Zeitintervall entsprechend länger als das erste Zeitintervall bestimmt wird, und wenigstens teilweise mit diesem übereinstimmt. Auch diese Form der gleitenden Berechnung ermöglicht insbesondere bei grafischer Darstellung auf einem Bildschirm sowie kontinuierlicher Aktualisierung der Verteilungen eine einfache Möglichkeit, Veränderungen in der ersten Verteilung zu erfassen. Ist die zweite Verteilung nämlich für das erste Zeitintervall bzw. Teile davon noch mit der ersten Verteilung identisch, kann nach darüberhinausgehender gleitender Berechnung möglicherweise eine Abweichung sich einstellen, woraus ein negatives Ergebnis für den Vergleich abgeleitet werden kann.

Darüber hinaus ist gemäß Anspruch 7 die der Erfindung zugrundeliegende Aufgabe gelöst durch ein Verfahren zur Schadenserkennung bei Betrieb einer Gasturbine umfassend folgende Schritte:
- Berechnen eines Mittelwerts von einzelnen Temperaturmesswerten über einen vorgegebenen Abtastzeitraum eines Ensembles von Temperatursensoren in oder an der Gasturbine,
- Berechnen der einzelnen Temperaturdifferenzen zwischen dem Mittelwert und den einzelnen Temperaturmesswerten über den vorgegebenen Abtastzeitraum,
- Berechnen der einzelnen Temperaturdifferenzen für zeitlich aufeinander folgende Abtastzeiträume über ein vorgegebenes Zeitintervall;
- Erstellen einer ersten Verteilung durch Einteilen der einem Temperatursensor zugeordneten Temperaturdifferenzen für das vorgegebene Zeitintervall in Temperaturdifferenzintervalle,
- Vergleich der ersten Verteilung mit einer zweiten Verteilung von ebenfalls in Temperaturdifferenzintervalle eingeteilte Temperaturdifferenzen,
- Erzeugen eines Betriebssignals auf Grundlage eines negativen Ergebnisses des Vergleichs,
- wobei die zweite Verteilung in Temperaturdifferenzintervalle eingeteilte Temperaturdifferenzen eines anderen Temperatursensors betrifft, welche jedoch für dasselbe Zeitintervall berechnet wurden.

Hierbei ist vorgesehen, dass die zweite Verteilung in Temperaturdifferenzintervalle eingeteilte Temperaturdifferenzen eines anderen Temperatursensors betrifft, welche jedoch für dasselbe Zeitintervall berechnet wurden. Insofern werden mit derselben Auswertemethode etwa unterschiedliche Temperatursensoren über den gleichen Messzeitraum ausgewertet. Sind die Temperatursensoren etwa so angeordnet, dass ihr Temperaturumfeld vergleichbar ist, sind über längere Betriebszeiträume auch vergleichbare Verteilungen zu erwarten. Diese können gewöhnliche Alterungserscheinungen nachvollziehen lassen. Weichen jedoch die Verteilungen ab einem gewissen Zeitpunkt voneinander ab, kann dies ein Anzeichen für eine Schadensnahme sein. Insbesondere bei Temperatursensoren, welche nach thermischen Gesichtspunkten einem zwar geometrisch anderen Ort jedoch thermisch gleichen Bedingungen ausgesetzt sein sollten, kann so schnell ein Abgleich der Temperatursensoren bzw. eine thermische Schadensnahme, welche mit einem bestimmten Temperatursensor korreliert werden kann, bestimmt werden.

Gemäß einer Weiterführung dieser Idee ist vorgesehen, dass der Vergleich der ersten Verteilung mit der zweiten Verteilung durch einen Vergleich des Maximums der ersten Verteilung mit dem Maximum der zweiten Verteilung erfolgt. Der Vergleich der Maxima ist, wie bereits oben ausgeführt, relativ einfach möglich, da lediglich zwei numerische Werte miteinander verglichen werden müssen. Die Berechnung für den Vergleich ist also verhältnismäßig einfach zu vollziehen, wie auch ein negatives Ergebnis schnell aus dieser Berechnung abzuleiten.

Gemäß einer zusätzlichen Weiterführung dieses Ansatzes ist vorgesehen, dass der Vergleich der Maxima alle Maxima der Temperatursensoren des Ensembles betrifft, so dass die Ensembledifferenz zwischen dem größten und dem kleinsten Maximum aus dem Ensemble bestimmt wird. Durch den Vergleich der einzelnen Maxima über alle Temperatursensoren hinweg kann so ein Temperaturvarianzfeld ermittelt werden, innerhalb dessen die maximalen ermittelten Temperaturunterschiede angegeben sind. Aus der Streubreite der einzelnen Maxima ergibt sich auch ein Maß für die Temperaturwechselbeanspruchung, welche die betreffenden Anbringungsorte der Temperatursensoren in der Gasturbine erfahren. Bei rotierenden Heißgaskomponenten erlaubt dies einen Rückschluss auf die thermische Belastung dieser Komponenten. Die rotierenden Heißgaskomponenten werden nämlich kontinuierlich einer thermischen Wechselbeanspruchung ausgesetzt, welche umso größer ist, je größer die Streubreite aller Maxima ist. In anderen Worten ist die thermische Wechselbeanspruchung umso größer, je stärker das größte Maximum von dem kleinsten Maximum abweicht.

Nachfolgend soll die Erfindung anhand einzelner Figuren im Detail näher beschrieben werden. Hierbei ist darauf hinzuweisen, dass die in den Figuren mit gleichen Bezugszeichen versehenen technischen Merkmale gleiche technische Funktion aufweisen sollen.

Ebenfalls ist darauf hinzuweisen, dass die in den nachfolgenden Figuren beschriebenen technischen Merkmale in beliebiger Kombination miteinander, wie auch in beliebiger Kombination mit den vorab dargestellten Ausführungsformen der Erfindung beansprucht werden sollen, soweit die daraus resultierende Kombination die der Erfindung zugrunde liegende Aufgabe lösen kann.

Fernerhin ist darauf hinzuweisen, dass die nachfolgenden Figuren lediglich schematisch zu verstehen sind, und insbesondere keinerlei Aussagen zu einer behaupteten Einschränkung der Ausführbarkeit der Erfindung erlauben.

Hierbei zeigen:
- FIG 1: eine diagrammatische Darstellung einer ersten Häufigkeitsverteilung D₁ einzelner Temperaturdifferenzwerte für ein vorgegebenes Zeitintervall in Temperaturdifferenzintervalle dT_{i,j};
- FIG 2: eine diagrammatische Darstellung der in Figur 1 gezeigten ersten Häufgkeitsverteilung D₁ unter Angabe des Häufigkeitsmaximums Max₁ bei einer Temperatur von -4.0 K (= dT_{Max1});
- FIG 3: ein Farbwerthistogramm einer zeitlichen Darstellung der Veränderung einzelner Verteilungen über die Zeit t;
- FIG 4: eine diagrammatische Darstellung des Verhältnisses der Lage von erstem Häufigkeitsmaximum Max₁ (bzw. Max₁') der ersten Verteilung mit dem aus der zweiten Verteilung abgeleiteten Zustandsraums Z bei unterschiedlichen Leistungen P der Gasturbine;
- FIG 5: eine diagrammatische Darstellung der Streuung der Maxima Maxᵢ für ein Ensemble von Temperatursensoren für jeweils ein vorbestimmtes Zeitintervall;
- FIG 6: eine diagrammatische Darstellung der Streuung der Maxima Maxᵢ von Temperatursensoren eines Ensembles von Temperatursensoren wie in FIG 5 gezeigt, jedoch mit deutlich geringerer Streubreite und
- FIG 7: eine flussdiagrammatische Darstellung einer Ausführungsform des erfindungsgemäßen Verfahrens zur Schadenserkennung bei Betrieb einer Gasturbine.

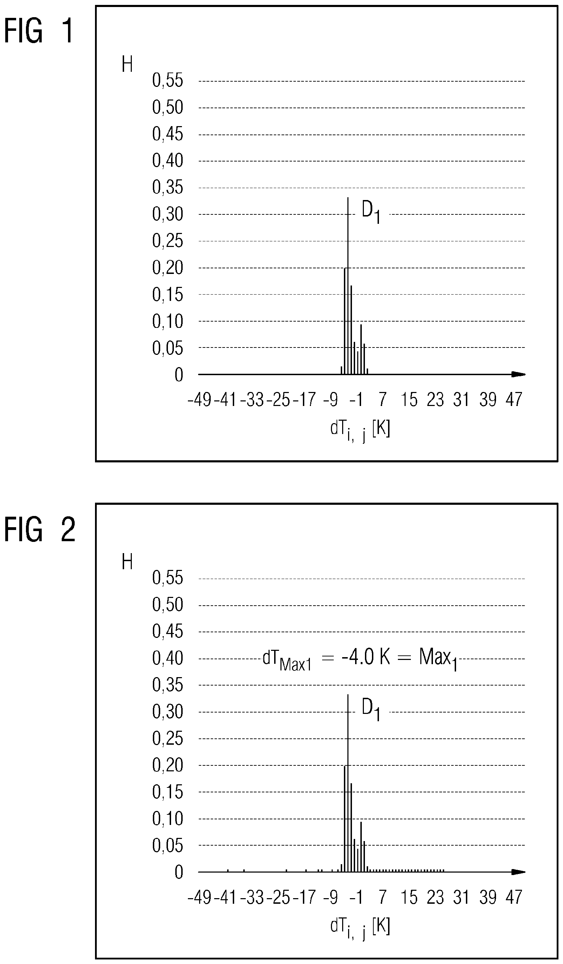

FIG 1 zeigt eine diagrammatische Darstellung einer ersten Häufigkeitsverteilung D₁, welche normiert wurde. Die Ordinate entspricht somit einer einheitslosen relativen Häufigkeit H. Wie zu erkennen ist, weist die Häufigkeitsverteilung D₁ eine Verteilungsbreite von etwa 10 K auf, wobei ein klares Maximum bei einer Differenztemperatur dT von etwa -4 K ausgebildet ist. Die erste Verteilung D₁ wurde erstellt indem eine vorbestimmte Anzahl an Temperaturdifferenzen ΔT_{i,k} für zeitlich aufeinander folgende Abtasträume tₖ über ein vorgegebenes Zeitintervall dt₁ berechnet wurden und entsprechend einer Temperaturdifferenzintervalleinteilung dT in einzelne numerische Intervalle dT_{i,j} eingeteilt wurde. Nach entsprechender Normierung und Abgleich der Temperatur auf einen vorbestimmten Nullwert hin ergibt sich die dargestellte erste Verteilung D₁.

An dieser Stelle ist darauf hinzuweisen, dass die vorhergehenden und nachfolgenden Indizes i und m sich von 1 bis zur Anzahl der Temperatursensoren des betrachteten Ensembles erstrecken. Sind einzelne Sensoren beispielhaft herausgenommen, so werden die Indizes ausdrücklich angegeben, zum Beispiel mit 1 oder 2. Der Index k erstreckt sich weiterhin von 1 bis zur Anzahl der Abtastzeiträume, welche innerhalb eines Zeitintervalls dt liegen. Dies kann lediglich nur ein Abtastzeitraum sein, oder aber signifikant mehr, etwa auch von der Größenordnung 10⁶ und mehr. Der Index j betrifft die Anzahl der einzelnen Temperaturdifferenzintervalle für eine Verteilung. Hierbei liegt der Index j typischerweise zwischen 1 und weniger als 1.000.

Die dargestellte erste Verteilung D₁ kann nun gemäß einer Ausführungsform des erfindungsgemäßen Verfahrens weiter mit einer zweiten Verteilung D₂ verglichen werden, wobei die zweite Verteilung D₂ ebenfalls in Temperaturdifferenzintervalle dT eingeteilte Temperaturdifferenzen ΔT_{i,k} aufweist. Ergibt sich nun eine Abweichung bei dem Vergleich der ersten Verteilung D₁ mit der zweiten Verteilung D₂, kann möglicherweise auf ein negatives Ergebnis des Vergleichs geschlossen werden, wobei ein Betriebssignal auf deren Grundlage erzeugt wird, und so dem Betreiber der Gasturbine etwa signalisiert wird, dass ein thermischer Schadensfall zukünftig eintreten wird, oder schon eingetreten ist.

FIG 2 zeigt, wie bereits in FIG 1 dargestellt, die erste Verteilung D₁ jedoch nun mit einem Hinweis auf das Maximum der ersten Verteilung D₁. Da die Temperaturwerte auf einen Nullwert hin abgeglichen wurden, zeigt die vorliegende Verteilung einen Maximalwert dT_{Max1} = Max₁ von -4 K. Ausführungsgemäß kann dieser Maximalwert Maxi für einen weiteren Vergleich der ersten Verteilung D₁ mit der zweiten Verteilung D₂ herangezogen werden. Hierbei können beispielsweise, wie oben erklärt, die Maximalwerte Maxi und Max₂ (=dT_{Max2}) der beiden Verteilungen D₁ und D₂ miteinander verglichen werden, oder aber auch eine Übereinstimmung des Maximalwerts Max₁ mit einem Zustandsraum Z, welcher aus der Verteilungsbreite der zweiten Verteilung D₂ abgeleitet wurde.

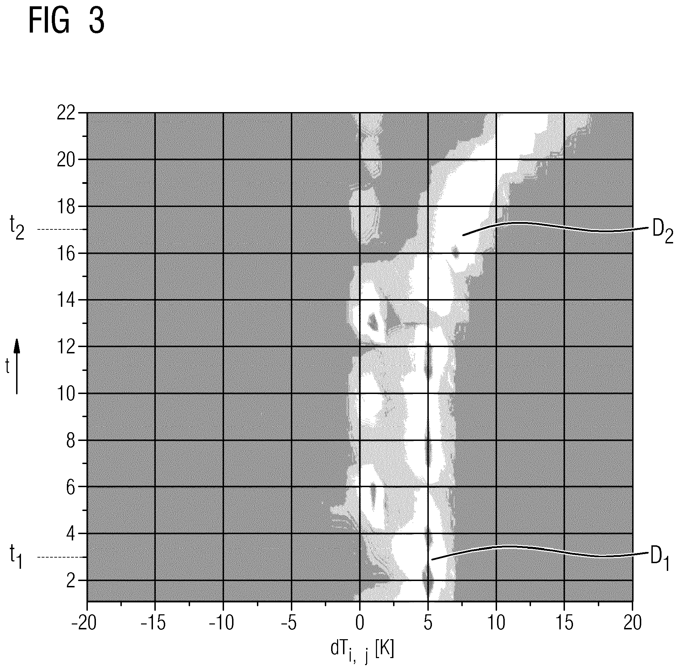

FIG 3 zeigt ein Farbwerthistogramm einzelner Verteilungen im zeitlichen Verlauf. Hierbei sind die in Temperaturdifferenzintervalle dT eingeteilten Verteilungen D gegen die Zeit t aufgetragen. Die Zeit t ihrerseits ergibt sich aus einer kontinuierlichen Darstellung einzelner Zeitintervalle dt, welche aufeinander folgen. Typischerweise trägt die Zeitachse die Einheit von Wochen. Der vorliegende Fall zeigt also den zeitlichen Verlauf der in Temperaturdifferenzintervalle dT_{i,j} eingeteilte Temperaturdifferenzen ΔT_{i,k} über eine Gesamtzeit von 22 Wochen. Die Zeitintervalle dt haben hierbei eine nicht weiter spezifizierte Länge. Nimmt man jedoch beispielsweise die erste Verteilung D₁ zum Zeitpunkt von drei Wochen, so stellt man fest, dass die Verteilung ein Maximum im Bereich von ca. +5 K aufweist. Änderungen dieses Maximalwerts der Verteilung D₁ etwa zu einer Zeit von fünfeinhalb Wochen, lassen sich durch unterschiedliche Betriebsbedingungen der Gasturbine in Teillast erklären. Eine thermische Schadensnahme kann in diesem Fall aber ausgeschlossen werden.

Betrachtet man hingegen eine Verteilung, im Sinne einer zweiten Verteilung D₂, zum Zeitpunkt von 17 Wochen, so stellt man fest, dass die Verteilung zu größeren Temperaturdifferenzintervallwerten dT_{i,j} hin verschoben wurde. Das Maximum der Verteilung liegt nun etwa bei 7,5 K. Dieser Umstand ergibt sich aufgrund einer Schadensnahme der Brennkammerbauteile in der Gasturbine. In anderen Worten lässt sich klar aus dem Unterschied der ersten Verteilung D₁ und der zweiten Verteilung D₂, welche beide auf der Einteilung unterschiedlicher Temperaturdifferenzen ΔT_{i,k} eines Temperatursensors Sᵢ für gleiche Temperaturdifferenzintervalle dT_{i,j} erzeugt wurden, eine optisch leicht sichtbare Änderung erkennen. Diese Abweichung beider Verteilungen D₁, D₂ nimmt nach der siebten Woche bis zur zweiundzwanzigsten Woche noch zu. Zur zweiundzwanzigsten Woche konnte der Betreiber der betreffenden Gasturbine dann einen Ausfall der Gasturbine aufgrund von einer Schädigung der Heißgasbauteile in der Brennkammer verzeichnen. Dieser Schadensfall zur zweiundzwanzigsten Woche hatte sich jedoch bereits ab der sechzehnten Woche angekündigt. Durch eine kontinuierliche Überwachung der Temperaturmesswerte bzw. durch eine geeignete Auswertung wie im Rahmen der vorliegenden Erfindung vorgeschlagen, kann leicht anhand der optischen wie auch numerischen Abweichungen der berechneten Einzelverteilungen ein zukünftiger Schadensfall vorhergesagt werden.

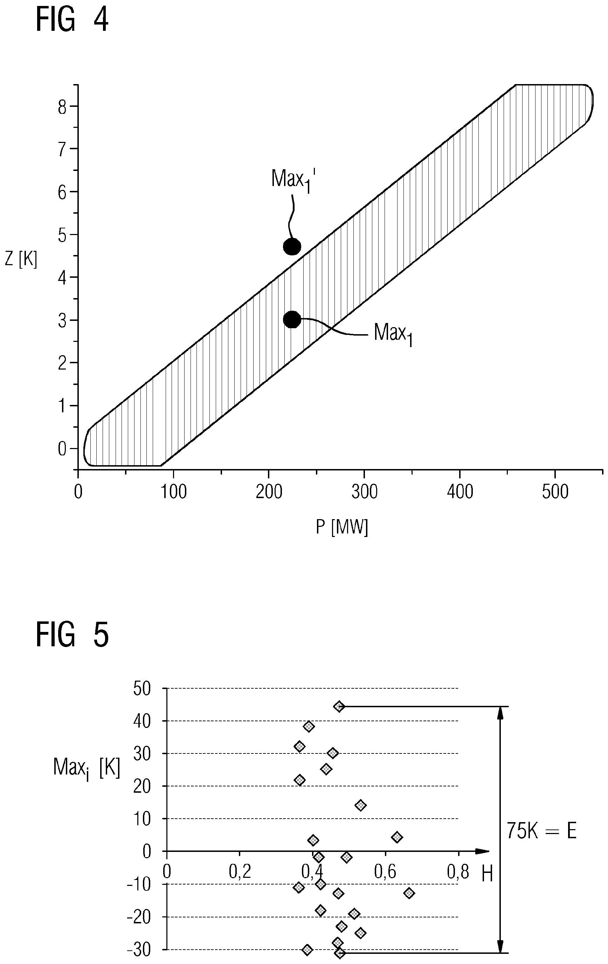

FIG 4 zeigt eine diagrammatische Darstellung eines optischen Vergleichs zwischen dem Maximalwert Max₁ (bzw. Max₁') der ersten Verteilung D₁ im Vergleich zu einer aus der zweiten Verteilung D₂ ermittelten Verteilungsbreite, dem Zustandsraum Z. Hierbei ist die Verteilungsbreite in Abhängigkeit der Leistung P der Gasturbine aufgetragen. Wie sich leicht nachvollziehen lässt, nimmt diese Verteilungsbreite mit zunehmender Leistung zwar nicht zu, ist jedoch zu größeren Temperaturwerten hin linear verschoben. Wie bereits vorab angemerkt, ist es bekannt, dass sich bei unterschiedlichen Lasten der Gasturbine auch unterschiedliche Temperaturen bei der Verbrennung einstellen, insbesondere bei Gasturbinen ist es etwa bekannt, dass bei zunehmender Last gemäß bestimmter Betriebsverfahren sich auch die Brennkammertemperatur ändert.

Der Vergleich des ersten Maximums Max₁ der ersten Verteilung D₁ mit dem Zustandsraum Z der zweiten Verteilung D₂ erfolgt bei einer Leistung von etwa 215 MW. Wie deutlich zu erkennen ist, liegt der Maximalwert Maxi innerhalb des schraffierten Bereichs des markierten Zustandsraums Z. In anderen Worten ist die Abweichung der ersten Verteilung D₁ von der zweiten Verteilung D₂, welche vorliegend nicht explizit gezeigt ist, aber anhand des Zustandsraums bildlich darstellbar gemacht wurde, ausreichend übereinstimmend. Eine Schadensnahme der Heißgasteile der Gasturbine kann damit weitgehend ausgeschlossen werden.

Anders verhält es sich hingegen mit dem ebenfalls in dem Diagramm dargestellten Maximalwert Max₁', welcher etwa den Maximalwert einer anderen ersten Verteilung D₁ darstellen soll. Wie leicht zu erkennen ist, fällt dieser alternative Maximalwert Max₁' nicht in den grau schattierten Bereich und liegt damit außerhalb des Zustandsraums Z der zweiten Verteilung D₂. Dieser Umstand kann nun als negatives Ergebnis des Vergleichs der beiden Verteilungen D₁ und D₂ gewertet werden, und kann in der Erzeugung eines Betriebssignals münden. Der Betreiber kann also aufgrund der Abweichung der Werte einen Rückschluss darauf ziehen, dass ein mögliches thermisches Schadensereignis eingetreten ist.

FIG 5 zeigt eine Darstellung aller Maxima Maxᵢ (=dT_{Maxi}) eines Ensembles an Temperatursensoren Sᵢ. Insgesamt sind die Maxima Maxi von 24 Temperatursensoren Sᵢ dargestellt, wobei die Streuungsbreite ungefähr 75 K aufweist. Die Streuungsbreite entspricht der Ensembledifferenz E, welche auch als Vergleichsgröße für zukünftige Vergleiche herangezogen werden kann.

Es ist darauf hinzuweisen, dass die gezeigten Maxima wieder einem Nullwertabgleich unterzogen wurden, bzw. die Maximalwerte mit einem konstanten Faktor soweit reduziert, dass sie um 0 K herum streuen. Diese diagrammtechnischen Vereinfachungen dienen lediglich der verbesserten Darstellung.

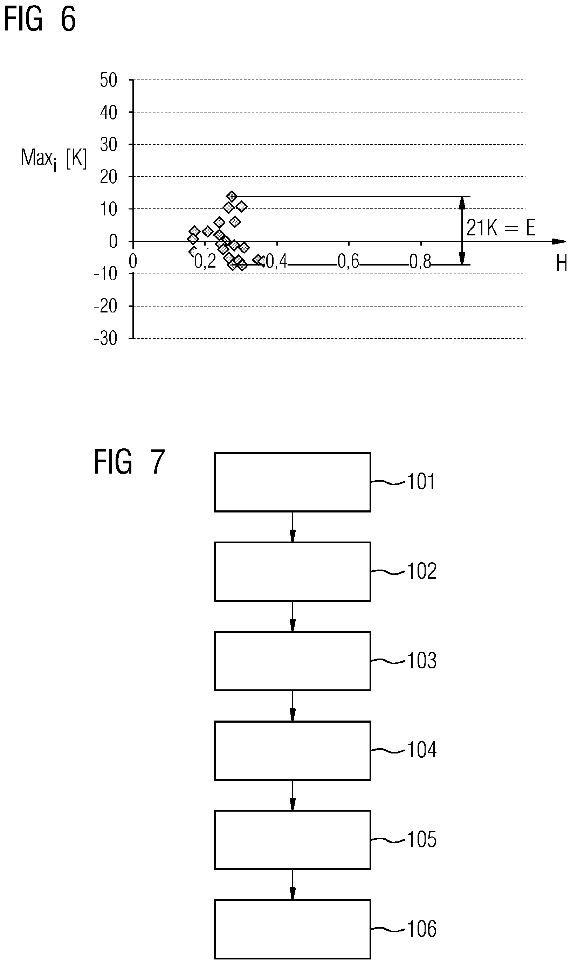

FIG 6 zeigt im Vergleich zu FIG 5 ein Diagramm einer Anzahl an Maxima Maxᵢ des gleichen Ensembles an Temperatursensoren Sᵢ, wobei nun die Streubreite deutlich geringer ist und bei 21 K liegt. Durch einen Vergleich der Ensembledifferenz E beider Darstellungen lässt sich nun erkennen, dass innerhalb der betrachteten Gasturbine gemäß dem Betriebszustand nach Figur 6 weniger große thermische Abweichungen vorliegen. Insbesondere bei Gasturbinen mit beweglichen bzw. rotierenden Bauteilen, wie etwa dem Rotor, kann insofern davon ausgegangen werden, dass die sich beweglichen Bauteile vermehrt bzw. einer stärkeren thermischen Wechselbeanspruchung ausgesetzt sind.

Sind die gezeigten Maxima Maxᵢ etwa von Temperatursensoren abgeleitet, welche radial im Abgasaustrittskanal der Gasturbine angeordnet sind, lässt sich aus der größeren Streubreite nach FIG 5 rückschließen, dass insbesondere die rotierenden Turbinenschaufeln bei ihrer Bewegung einer stärkeren thermischen Wechselbeanspruchung unterliegen. Dies wiederum lässt Schlüsse darauf zu, dass die thermisch belasteten Bauteile einem schnelleren Alterungsprozess unterliegen und damit verfrüht gewartet bzw. ausgetauscht werden müssen. Stellt man nun etwa im Laufe des Betriebs fest, dass die Streubreite sich bei einzelnen Maxima Maxᵢ recht stark erhöht bzw. die Ensembledifferenz E sich signifikant ändert, kann dies als negatives Ergebnis gewertet werden und dem Betreiber der Gasturbine anzeigen, dass eine Wartungsmaßnahme etwa durchgeführt werden sollte.

FIG 7 zeigt eine flussdiagrammatische Darstellung einer Ausführungsform des erfindungsgemäßen Verfahrens zur Schadenserkennung beim Betrieb einer Gasturbine, welches folgende Schritte umfasst:
- Berechnen des Mittelwerts T_{avg,k} von einzelnen Temperaturmesswerten T_{i,k} über einen vorgegebenen Abtastzeitraum tₖ eines Ensembles von Temperatursensoren Sᵢ in oder an der Gasturbine 1 (erster Verfahrensschritt 101);
- Berechnen der einzelnen Temperaturdifferenzen ΔT_{i,k} zwischen dem Mittelwert T_{avg,k} und den einzelnen Temperaturmesswerten T_{i,k} über den vorgegebenen Abtastzeitraum tₖ (zweiter Verfahrensschritt 102);
- Berechnen der einzelnen Temperaturdifferenzen ΔT_{i,k} für zeitlich aufeinander folgende Abtastzeiträume tₖ über ein vorgegebenes Zeitintervall dt₁ (dritter Verfahrensschritt 103);
- Erstellen einer ersten Verteilung D₁ durch Einteilen der einen Temperatursensor Sᵢ zugeordneten Temperaturdifferenzen ΔT_{i,k} für das vorgegebene Zeitintervall dt₁ in Temperaturdifferenzintervalle dT_{i,j} (vierter Verfahrensschritt 104);
- Vergleichen der ersten Verteilung D₁ mit einer zweiten Verteilung D₂ vom ebenfalls in Temperaturdifferenzintervalle dT_{i,j} eingeteilte Temperaturdifferenzen ΔT_{i,k} (fünfter Verfahrensschritt 105);
- Erzeugen eines Betriebssignals auf Grundlage eines negativen Ergebnisses des Vergleichs (sechster Verfahrensschritt 106).

Weitere Ausführungsformen ergeben sich aus den Unteransprüchen.

## Patentansprüche

1. Verfahren zur Schadenserkennung bei Betrieb einer Gasturbine umfassend folgende Schritte:
- Berechnen eines Mittelwerts (T_{avg,k}) von einzelnen Temperaturmesswerten (T_{i,k}) über einen vorgegebenen Abtastzeitraum (tₖ) eines Ensembles von Temperatursensoren (Sᵢ) in oder an der Gasturbine,
- Berechnen der einzelnen Temperaturdifferenzen (ΔT_{i,k}) zwischen dem Mittelwert (T_{avg,k}) und den einzelnen Temperaturmesswerten (T_{i,k}) über den vorgegebenen Abtastzeitraum (tₖ),
- Berechnen der einzelnen Temperaturdifferenzen (ΔT_{i,k}) für zeitlich aufeinander folgende Abtastzeiträume (tₖ) über ein vorgegebenes Zeitintervall (dt₁);
- Erstellen einer ersten Verteilung (D₁) durch Einteilen der einem Temperatursensor (Sᵢ) zugeordneten Temperaturdifferenzen (ΔT_{i,k}) für das vorgegebene Zeitintervall (dt₁) in Temperaturdifferenzintervalle (dT_{i,j}),
- Vergleich der ersten Verteilung (D₁) mit einer zweiten Verteilung (D₂) von ebenfalls in Temperaturdifferenzintervalle (dT_{i,j}) eingeteilte Temperaturdifferenzen (ΔT_{i,k}),
- Erzeugen eines Betriebssignals auf Grundlage eines negativen Ergebnisses des Vergleichs,
- wobei die zweite Verteilung (D₂) in dieselben Temperaturdifferenzintervalle (dT_{i,j}) eingeteilte Temperaturdifferenzen (ΔTi,k) des selben Temperatursensors (Sᵢ) betrifft, welche jedoch für ein anderes Zeitintervall (dt₂) berechnet wurden.

2. Verfahren nach Anspruch 1,
**dadurch gekennzeichnet, dass**
der Vergleich der ersten Verteilung (D₁) mit der zweiten Verteilung (D₂) durch einen Vergleich des Maximums (Max₁) der ersten Verteilung (D₁) mit dem Maximum (Max₂) der zweiten Verteilung (D₂) erfolgt.

3. Verfahren nach Anspruch 1,
**dadurch gekennzeichnet, dass**
der Vergleich der ersten Verteilung (D₁) mit der zweiten Verteilung (D₂) dadurch erfolgt, dass beide Verteilungen (D₁, D₂) in einem gemeinsamen Diagramm mit einer den zeitlichen Verlauf über die beiden Zeitintervalle (dt₁, dt₂) repräsentierenden Achse aufgetragen werden.

4. Verfahren nach Anspruch 1,
**dadurch gekennzeichnet, dass**
der Vergleich der ersten Verteilung (D₁) mit der zweiten Verteilung (D₂) durch einen Vergleich der Lages des Maximums (Max₁) der ersten Verteilung (D₁) mit den Grenzen eines Zustandsraums (Z) erfolgt, welcher aus der Verteilungsbreite der zweiten Verteilung (D₂) bestimmt wurde.

5. Verfahren nach einem der vorhergehenden Ansprüche,
**dadurch gekennzeichnet, dass**
die erste Verteilung (D₁) und/oder die zweite Verteilung (D₂) kumulativ für alle Abtastzeiträume (tₖ) der Zeitintervalle (dt₁, dt₂) berechnet werden.

6. Verfahren nach einem der vorhergehenden Ansprüche,
**dadurch gekennzeichnet, dass**
die zweite Verteilung (D₂) aus der ersten Verteilung (D₁) durch eine gleitende Berechnung über das erste Zeitintervall (dt₁) hinaus hervorgeht.

7. Verfahren zur Schadenserkennung bei Betrieb einer Gasturbine umfassend folgende Schritte:
- Berechnen eines Mittelwerts (T_{avg,k}) von einzelnen Temperaturmesswerten (T_{i,k}) über einen vorgegebenen Abtastzeitraum (tₖ) eines Ensembles von Temperatursensoren (Sᵢ) in oder an der Gasturbine,
- Berechnen der einzelnen Temperaturdifferenzen (ΔT_{i,k}) zwischen dem Mittelwert (T_{avg,k}) und den einzelnen Temperaturmesswerten (T_{i,k}) über den vorgegebenen Abtastzeitraum (tₖ),
- Berechnen der einzelnen Temperaturdifferenzen (ΔT_{i,k}) für zeitlich aufeinander folgende Abtastzeiträume (tₖ) über ein vorgegebenes Zeitintervall (dt₁);
- Erstellen einer ersten Verteilung (D₁) durch Einteilen der einem Temperatursensor (Sᵢ) zugeordneten Temperaturdifferenzen (ΔT_{i,k}) für das vorgegebene Zeitintervall (dt₁) in Temperaturdifferenzintervalle (dT_{i,j}),
- Vergleich der ersten Verteilung (D₁) mit einer zweiten Verteilung (D₂) von ebenfalls in Temperaturdifferenzintervalle (dT_{i,j}) eingeteilte Temperaturdifferenzen (ΔT_{i,k}),
- Erzeugen eines Betriebssignals auf Grundlage eines negativen Ergebnisses des Vergleichs,
- wobei die zweite Verteilung (D₂) in Temperaturdifferenzintervalle (dT_{m,j}) eingeteilte Temperaturdifferenzen (ΔT_{m,k}) eines anderen Temperatursensors (Sₘ) betrifft, welche jedoch für das selbe Zeitintervall (dt₁) berechnet wurden.

8. Verfahren nach Anspruch 7,
**dadurch gekennzeichnet, dass**
der Vergleich der ersten Verteilung (D₁) mit der zweiten Verteilung (D₂) durch einen Vergleich des Maximums (Max₁) der ersten Verteilung (D₁) mit dem Maximum (Max₂) der zweiten Verteilung (D₂) erfolgt.

9. Verfahren nach Anspruch 8,
**dadurch gekennzeichnet, dass**
der Vergleich der Maxima (Maxᵢ) für alle Maxima der Temperatursensoren (Sᵢ) des Ensembles betrifft, so dass die Ensembledifferenz (E) zwischen dem größten und dem kleinsten Maximum (Maxᵢ) aus dem Ensemble bestimmt wird.

10. Regelvorrichtung, welche dazu ausgebildet ist, das Verfahren nach einem der Ansprüche 1 bis 9 auszuführen, wobei eine Berechnungseinheit umfasst ist, welche die Berechnung des Mittelwerts (T_{avg,k}) der einzelnen Temperaturmesswerte (Tᵢ,ₖ), die Berechnung der einzelnen Temperaturdifferenzen (ΔTᵢ,ₖ), die Erstellung einer ersten Verteilung (D₁) und einer zweiten Verteilung (D₂), und den Vergleich der ersten Verteilung (D₁) mit einer zweiten Verteilung (D₂) ausführt, sowie eine Signalerzeugungseinheit, welche im Falle eines negativen Ergebnisses des Vergleichs ein Betriebssignal erzeugt.

11. Gasturbine, welche eine Regelvorrichtung nach Anspruch 10 aufweist.

## Claims

1. Method for detecting damage during the operation of a gas turbine, comprising the following steps:
- calculation of an average value (T_{avg,k}) of individual temperature measurement values (T_{i,k}) over a predetermined sampling period (tₖ) of an ensemble of temperature sensors (Sᵢ) in or on the gas turbine,
- calculation of the individual temperature differences (ΔT_{i,k}) between the average value (T_{avg,k}) and the individual temperature measurement values (T_{i,k}) over the predetermined sampling period (tₖ),
- calculation of the individual temperature differences (ΔT_{i,k}) for chronologically successive sampling periods (tₖ) over a predetermined time interval (dt₁),
- compilation of a first distribution (D₁) by dividing the temperature differences (ΔT_{i,k}) assigned to one temperature sensor (Sᵢ) for the predetermined time interval (dt₁) into temperature difference intervals (dT_{i,j});
- comparison of the first distribution (D₁) with a second distribution (D₂) of temperature differences (ΔT_{i,k}) likewise divided into temperature difference intervals (dT_{i,j}),
- generation of an operating signal on the basis of a negative outcome of the comparison,
- wherein the second distribution (D₂) relates to temperature differences (ΔT_{i,k}) of the same temperature sensor (Sᵢ), which are divided into the same temperature difference intervals (dT_{i,j}) but which were calculated for a different time interval (dt₂).

2. Method according to Claim 1,
**characterized in that**
the comparison of the first distribution (D₁) with the second distribution (D₂) is carried out by a comparison of the maximum (Max₁) of the first distribution (D₁) with the maximum (Max₂) of the second distribution (D₂).

3. Method according to Claim 1,
**characterized in that**
the comparison of the first distribution (D₁) with the second distribution (D₂) is carried out by plotting the two distributions (D₁, D₂) in a common diagram with an axis representing the time profile over the two time intervals (dt₁, dt₂).

4. Method according to Claim 1,
**characterized in that**
the comparison of the first distribution (D₁) with the second distribution (D₂) is carried out by a comparison of the position of the maximum (Max₁) of the first distribution (D₁) with the boundaries of a state space (Z) which has been determined from the distribution width of the second distribution (D₂).

5. Method according to one of the preceding claims,
**characterized in that**
the first distribution (D₁) and/or the second distribution (D₂) are calculated cumulatively for all sampling periods (tₖ) of the time intervals (dt₁, dt₂).

6. Method according to one of the preceding claims,
**characterized in that**
the second distribution (D₂) is derived from the first distribution (D₁) by a sliding calculation over the first time interval (dt₁).

7. Method for detecting damage during the operation of a gas turbine, comprising the following steps:
- calculation of an average value (T_{avg,k}) of individual temperature measurement values (T_{i,k}) over a predetermined sampling period (tₖ) of an ensemble of temperature sensors (Sᵢ) in or on the gas turbine,
- calculation of the individual temperature differences (ΔT_{i,k}) between the average value (T_{avg,k}) and the individual temperature measurement values (T_{i,k}) over the predetermined sampling period (tₖ),
- calculation of the individual temperature differences (ΔT_{i,k}) for chronologically successive sampling periods (tₖ) over a predetermined time interval (dt₁);
- compilation of a first distribution (D₁) by dividing the temperature differences (ΔT_{i,k}) assigned to one temperature sensor (Sᵢ) for the predetermined time interval (dt₁) into temperature difference intervals (dT_{i,j}),
- comparison of the first distribution (D₁) with a second distribution (D₂) of temperature differences (ΔT_{i,k}) likewise divided into temperature difference intervals (dT_{i,j}),
- generation of an operating signal on the basis of a negative outcome of the comparison,
- wherein the second distribution (D₂) relates to temperature differences (ΔT_{m,k}) of a different temperature sensor (Sₘ), which are divided into temperature difference intervals (dT_{m,j}) but which were calculated for the same time interval (dt₁).

8. Method according to Claim 7,
**characterized in that**
the comparison of the first distribution (D₁) with the second distribution (D₂) is carried out by a comparison of the maximum (Max₁) of the first distribution (D₁) with the maximum (Max₂) of the second distribution (D₂).

9. Method according to Claim 8,
**characterized in that**
the comparison of the maxima (Maxᵢ) applies for all maxima of the temperature sensors (Sᵢ) of the ensemble, so that the ensemble difference (E) between the greatest and smallest maximum (Maxᵢ) from the ensemble is determined.

10. Control device which is configured in order to carry out the method according to one of Claims 1 to 9, a calculation unit being contained which carries out the calculation of the average value (T_{avg,k}) of the individual temperature measurement values (T_{i,k}), the calculation of the individual temperature differences (ΔT_{i,k}), the compilation of a first distribution (D₁) and of a second distribution (D₂), and the comparison of the first distribution (D₁) with a second distribution (D₂), as well as a signal generation unit which generates an operating signal in the event of a negative outcome of the comparison.

11. Gas turbine which comprises a control device according to Claim 10.

## Revendications

1. Procédé de détection d'un endommagement lorsqu'une turbine à gaz est en fonctionnement, comprenant les stades suivants :
- calcul d'une valeur (T_{avg,k}) moyenne de diverses valeurs (T_{i,k}) de mesure de température sur un laps (tₖ) de temps d'échantillonnage donné à l'avance d'un ensemble de capteurs (Sᵢ) de température dans ou sur la turbine à gaz,
- calcul des diverses différences (ΔT_{i,k}) de température entre la valeur (T_{avg,k}) moyenne et les diverses valeurs (T_{i,k}) de mesure de température sur le laps (tₖ) de temps d'échantillonnage donné à l'avance,
- calcul des diverses différences (ΔT_{i,k}) de température pendant des laps (tₖ) de temps d'échantillonnage se succédant dans le temps sur un intervalle (dt₁) de temps donné à l'avance ;
- établissement d'une première répartition (D₁) par répartition des différences (ΔT_{i,k}) de température associées à un capteur (Sᵢ) de température pendant l'intervalle (dt₁) de temps donné à l'avance en des intervalles (dT_{i,j}) de différences de température,
- comparaison de la première répartition (D₁) à une deuxième répartition (D₂) de différences (ΔT_{i,k}) de température réparties également en des intervalles (dT_{i,j}) de différences de température,
- production d'un signal de fonctionnement sur la base d'un résultat négatif de la comparaison,
- dans lequel la deuxième répartition (D₂) concerne des différences (ΔT_{i,k}) de température, réparties dans les mêmes intervalles (dT_{i,j}) de différences de température du même capteur (Sᵢ) de température, qui ont été calculées toutefois pour un autre intervalle (dt₂) de temps.

2. Procédé suivant la revendication 1,
**caractérisé en ce que**
la comparaison de la première répartition (D₁) à la deuxième répartition (D₂) s'effectue par une comparaison du maximum (Max₁) de la première répartition (D₁) au maximum (Max₂) de la deuxième répartition (D₂).

3. Procédé suivant la revendication 1,
**caractérisé en ce que**
la comparaison de la première répartition (D₁) à la deuxième répartition (D₂) s'effectue par le fait que l'on porte les deux répartitions (D₁, D₂) dans un graphique commun ayant un axe représentant la courbe dans le temps sur les deux intervalles (dt₁, dt₂) de temps.

4. Procédé suivant la revendication 1,
**caractérisé en ce que**
la comparaison de la première répartition (D₁) à la deuxième répartition (D₂) s'effectue par une comparaison de la position du maximum (Max₁) de la première répartition (D₁) aux limites d'un espace (Z) d'état, qui a été déterminé à partir de la largeur de la deuxième répartition (D₂).

5. Procédé suivant l'une des revendications précédentes,
**caractérisé en ce que**
l'on calcule la première répartition (D₁) et/ou la deuxième répartition (D₂) cumulativement pour tous les laps (tₖ) de temps d'échantillonnage des intervalles (dt₁, dt₂) de temps.

6. Procédé suivant l'une des revendications précédentes,
**caractérisé en ce que**
la deuxième répartition (D₂) va au-delà de la première répartition (D₁) par un calcul glissant sur le premier intervalle (dt₁) de temps.

7. Procédé de détection d'un endommagement lorsqu'une turbine à gaz est en fonctionnement, comprenant les stades suivants :
- calcul d'une valeur (T_{avg,k}) moyenne de diverses valeurs (T_{i,k}) de mesure de température sur un laps (tₖ) de temps d'échantillonnage donné à l'avance d'un ensemble de capteurs (Sᵢ) de température dans ou sur la turbine à gaz,
- calcul des diverses différences (ΔT_{i,k}) de température entre la valeur (T_{avg,k}) moyenne et les diverses valeurs (T_{i,k}) de mesure de température sur le laps (tₖ) de temps d'échantillonnage donné à l'avance,
- calcul des diverses différences (ΔT_{i,k}) de température pendant des laps (tₖ) de temps d'échantillonnage se succédant dans le temps sur un intervalle (dt₁) de temps donné à l'avance ;
- établissement d'une première répartition (D₁) par répartition des différences (ΔT_{i,k}) de température associées à un capteur (Sᵢ) de température pendant l'intervalle (dt₁) de temps donné à l'avance en des intervalles (dT_{i,j}) de différences de température,
- comparaison de la première répartition (D₁) à une deuxième répartition (D₂) de différences (ΔT_{i,k}) de température réparties également en des intervalles (dT_{i,j}) de différences de température,
- production d'un signal de fonctionnement sur la base d'un résultat négatif de la comparaison,
- dans lequel la deuxième répartition (D₂) concerne des différences (ΔT_{m,k}) de température, réparties dans des intervalles (dT_{m,j}) de différences de température, d'un autre capteur (Sₘ) de température, qui toutefois ont été calculées pour le même intervalle (dt₁) de temps.

8. Procédé suivant la revendication 7,
**caractérisé en ce que**
la comparaison de la première répartition (D₁) à la deuxième répartition (D₂) s'effectue par une comparaison du maximum (Max₁) de la première répartition (D₁) au maximum (Max₂) de la deuxième répartition (D₂).

9. Procédé suivant la revendication 8,
**caractérisé en ce que**
la comparaison des maximums (Maxᵢ) concerne tous les maximums des capteurs (Sᵢ) de température de l'ensemble, de sorte que la différence (E) d'ensemble est déterminée entre le maximum (Maxᵢ) le plus grand et le maximum (Maxᵢ) le plus petit de l'ensemble.

10. Système de régulation constitué pour effectuer le procédé suivant l'une des revendications 1 à 9, qui comprend une unité de calcul, qui effectue le calcul de la valeur (T_{avg,k}) moyenne des diverses valeurs (T_{i,k}) de mesure de la température, le calcul des diverses différences (ΔT_{i,k}) de température, l'établissement d'une première répartition (D₁) et d'une deuxième répartition (D₂) et la comparaison de la première répartition (D₁) à une deuxième répartition (D₂), ainsi qu'une unité de production de signal, qui produit un signal de fonctionnement dans le cas d'un résultat négatif de la comparaison.

11. Turbine à gaz, qui a un système de régulation suivant la revendication 10.
